# EUROPÄISCHE PATENTANMELDUNG

(11) **EP 3 995 347 A1**
(43) Veröffentlichungstag der Anmeldung: **11.05.2022**
(21) Anmeldenummer: 20000398.6
(22) Anmeldetag: 04.11.2020
(51) Int. Cl.: B60L 5/04, B60L 5/08, B60L 5/10

(54) **ANDRAHTVORRICHTUNG FÜR SCHLEIFSCHUHE AN FAHRDRÄHTEN**

(71) Anmelder: Westsächsische Hochschule Zwickau, 08056 Zwickau (DE)
(72) Erfinder: Semrau, Stefan, D-08248 Klingenthal (DE); Groschopp, Tom, D-9471 Königswalde (DE); Hille, Thomas, D-9569 Oederan (DE)
(74) Vertreter: Helge, Reiner

(57) **Zusammenfassung**

Andrahtvorrichtung für Schleifschuhe von Stromabnehmern an Fahrdrähten, welche mit am Fahrzeug höhen- und seitenbeweglich angebrachten federbelasteten Stangen verbunden sind, wobei die Schleifschuhe mit diesen überragenden verschwenkbaren Führungsbügeln versehen sind, wobei der Schleifschuh (4), der mit einem verschwenkbaren Führungsbügelsystem (5) ausgerüstet ist, mittels einer Hebe- und Senkeinheit (7) mit dem Stangenkopf (2) der Stromabnehmerstange (1) verbunden ist.

## Beschreibung

Die Erfindung betrifft eine Andrahtvorrichtung für das automatische oberleitungsparallele Ausrichten von Schleifschuhen eines Stromabnehmersystems für gleislose elektrisch angetriebene Fahrzeuge an Fahrdrähten, wobei das Stromabnehmersystem aus mindestens einer höhen- und seitenbeweglich am Fahrzeug angebrachten Stange, an dessen oberen Ende ein Stromabnehmerkopf angeordnet ist, besteht.

Nicht schienengebundene elektrisch angetriebene Fahrzeuge, insbesondere Elektrobusse, auch als O-Busse, Oberleitungsbusse oder Trolleybusse bezeichnet, wurden primär über zweipolige Leitungssysteme mit Energie versorgt. Derartige Fahrzeuge haben den Vorteil gegenüber solchen, die mit Verbrennungsmotoren betrieben werden, dass sie geräuscharm und lokal emissionsfrei betrieben werden.

Das Leitungssystem (Oberleitung) ist in einer definierten Höhe, in der Regel mittig über der vorgesehenen Fahrspur angeordnet. Über mit dem Fahrzeug verbundene Stromabnehmer wird der elektrische Kontakt zwischen Oberleitung und Fahrzeug hergestellt. Dazu muss der Stromabnehmer zum An- bzw. Abdrahten unter Einhaltung spezifischer Toleranzen für die Andruckkraft zwischen den Schleifleisten und dem Fahrdraht anheb- und absenkbar sein.

Der Stromabnehmer ist üblicherweise Bestandteil einer Stromabnehmereinrichtung, mittels derer Hilfe dieser zur Herstellung eines elektrischen Kontakts mit der Oberleitung über eine Stromabnehmer-Feder-Dämpfer-Baueinheit mit einer Anpresskraft gegen die Oberleitung gedrückt wird. Der Stromabnehmer muss insbesondere für einen Querausgleich relativ zum Fahrzeug bewegbar sein, denn durch nicht parallelen Verlauf der Oberleitung zur Fahrspur, verkehrsbedingtem Fahrstreifenwechsel usw. kann sich die Querlage der Oberleitung relativ zum Fahrzeug ändern. Der Stromabnehmer muss alternativ wie kumulativ zum Querausgleich insbesondere auch zum Ausgleich eines Höhenunterschiedes relativ zum Fahrzeug bewegbar sein, denn durch Bodenwellen, Schlaglöcher usw. in den Fahrbahnen kann sich die Höhenlage der Oberleitung relativ zum Fahrzeug ändern. Die vorgenannten Faktoren können ein automatisches An- bzw. Abdrahten negativ beeinflussen. Ferner muss das Stromabnehmersystem in der Lage sein, den hergestellten elektrischen Kontakt zwischen Oberleitung und Fahrzeug bei Fahrzeugstillstand und insbesondere auch im Fahrbetrieb zu halten.

Die DE 2460843 A1 beschreibt einen Stromabnehmer für gleislose, elektrisch angetriebene Fahrzeuge. Auf dem Dach eines gleislosen, elektrisch angetriebenen Fahrzeugs befindlicher Stromabnehmer mit einem Schleifschuh, der mittels einer am Wagendach angelenkten, federbelasteten Stange in Richtung auf einen Fahrdraht gedrückt wird und um seine Hochachse schwenkbar ist, ist über dem Schleifschuh hinausragend ein am Stromabnehmer angelenkter, verschwenkbarer Führungsbügel angeordnet, der eine zum Schleifschuh hinweisende Fläche bildet, die zur Schleifschuhmittelachse parallel verläuft.

Der Führungsbügel ist um eine Achse senkrecht zur Schleifschuhmittelachse verschwenkbar und kann mittels einer federbelasteten Nockenscheibe zwei diskrete Lagen einnehmen, wobei sich die von ihm gebildete Fläche einmal oberhalb des Schleifschuhs und zum anderen unterhalb des Schleifschuhs befindet.

Die DE 10 2014 113 594 A1 beschreibt eine Stromabnehmervorrichtung mit einer zum schleifenden stromabnehmenden Zusammenwirken mit einem stromführenden Fahrdraht ausgebildeten Schleiferbaugruppe und einer mit dieser verbundenen und mit dieser relativ zu einer Trägereinheit verschwenkbaren, gegenüber einer Schleiferbreite der Schleiferbaugruppe eine erweiterte Führungsöffnung für ein Andrahten der Schleiferbaugruppe am Fahrdraht anbietenden Fahrdrahtfangbaugruppe, wobei die Fahrdrahtfangbaugruppe mindestens einen einends einen freien Endabschnitt und anderenends einen zum Abtasten von Kulissenmitteln, insbesondere ansitzend an der Trägereinheit, ausgebildeten Abtastabschnitt aufweisenden Arm aufweist, der so ausgebildet ist, dass er als Reaktion auf einen beim Andrahten erfolgenden Krafteintrag auf die Fahrdrahtfangbaugruppe und unter Abtasten zumindest eines Abschnitts eines Kulissenverlaufs der Kulissenmittel eine Faltbewegung zur Verengung der Führungsöffnung durchführt.

Gleislose, elektrisch angetriebene Fahrzeuge, wie zum Beispiel Trolleybusse, werden primär über zweipolige Leitungssysteme in Form von Oberleitungen mit Energie versorgt. Diese Leitungssysteme werden hauptsächlich mittig über der vorgesehenen Spur geführt. In einer konkreten Verkehrssituation können diese aber auch seitliche Abweichungen um mehrere Meter aufweisen.

Die DE 10 2012 002 749 A1 beschreibt eine Vorrichtung für das automatische oberleitungsparallele Ausrichten der Schleifschuhe beim Andrahten der Stangenstromabnehmer bei Oberleitungsfahrzeugen. Hierbei handelt es sich um eine Vorrichtung, die einen ansonsten weitgehend herkömmlichen Stromabnehmerkopf für einen Stangenstromabnehmer eines Oberleitungsfahrzeuges derart ergänzt, dass eine Parallelausrichtung des Schleifschuhs des Stromabnehmerkopfes um seine Vertikaldrehachse automatisch bei seiner Annäherung an die Oberleitung erfolgt. Die Vorrichtung verfügt dazu über eine aus Drahtgebilden bestehende Fangeinrichtung, die in der Grundstellung nach oben eine Trichterrinne ausbildet, die sich bei Berührung der Oberleitung automatisch nach dieser ausrichtet. Durch den beim sich anschließenden tatsächlichen Andrahten von der Oberleitung auf den Schleifschuh ausgeübten Druck wird eine weitere Komponente der Vorrichtung, nämlich ein höhenverschiebbares Formstück, gegen eine Feder relativ zum Schleifschuh nach oben bewegt. Diese Bewegung wird durch eine Hebelkonstruktion, die Teil der genannten Drahtgebilde ist, in eine Schwenkbewegung der letzteren übersetzt. In einer Variante wird die genannte Schwenkbewegung zusätzlich durch Abrollen eines Kegelzahnrades auf einem einer Zahnstange ähnlichen Zahnlauf in eine Drehbewegung des oberen Teils der Fangeinrichtung übersetzt. Damit wird erreicht, dass die Fangeinrichtung, die im abgedrahteten Zustand die genannte Trichterrinne bildet, im angedrahteten Zustand nach unten und in der Variante zusätzlich auch nach innen geschwenkt ist und sich damit nicht im Kollisionsbereich mit der Oberleitungsaufhängung und -führung befindet.

Aufgabe der Erfindung ist es daher, eine Vorrichtung anzugeben, mit der eine automatische oberleitungsparallele Ausrichtung des Schleifschuhs an einem Stangenstromabnehmer bei einem Oberleitungsfahrzeug im Zuge des Andrahtens und zwar dergestalt erfolgt, dass dieser Vorgang einfach bei der Annäherung des Stromabnehmerkopfes von unten und auch während der Fahrt des Fahrzeuges erfolgen kann. Weiterhin ist es Aufgabe der Erfindung, die gattungsgemäße Stromabnehmervorrichtung zu verbessern, insbesondere eine an der Stromabnehmervorrichtung kopfseitig vorgesehene Fahrdrahtfangbaugruppe im Hinblick auf ihre mechanisch-konstruktive Realisierung zu vereinfachen, dabei die Betriebssicherheit zu erhöhen und insbesondere eine solche Vorrichtung für einen Einsatz auch unter belastenden Umgebungsbedingungen betriebssicher und mit hoher Standzeit auszugestalten.

Erfindungsgemäß wird die Aufgabe durch eine Andrahtvorrichtung für Schleifschuhe von Stromabnehmern an Fahrdrähten gelöst, welche mit am Fahrzeug höhen- und seitenbewegliche angebrachten federbelasteten Stangen verbunden sind, die Schleifschuhe mit diesen überragenden verschwenkbaren Führungsbügeln versehen sind, und im Zuge des Andrahtens eine automatische oberleitungsparallele Ausrichtung des Schleifschuhes erfolgt, wobei der Schleifschuh, der mit einem verschwenkbaren Führungsbügelsystem ausgerüstet ist, mittels einer Hebe- und Senkeinheit mit dem Stangenkopf der Stromabnehmerstange verbunden ist. Die Hebe- und Senkeinheit weist einen federbelasteten Mechanismus auf, wodurch das Führungsbügelsystem über die Achse im abgedrahteten Zustand aus der horizontalen Lage in eine vertikale Lage schwenkt.

Das Führungsbügelsystem schwenkt beim Andrahtvorgang durch den Anpreßdruck des Schleifschuhs an den Fahrdraht aus einer vertikalen Lage in eine horizontale Lage, wobei das Führungsbügelsystem aus zwei sich gegenüberliegende nach außen geneigte Drahtbügel besteht, die über die Drahtbügelhalter mit der Achse verbunden sind. Der Schleifschuh ist mit dem Führungsbügelsystem über die Hub- und Drehachse der Hebe- und Senkeinheit mit dem Stangenkopf verbunden.

Bei der erfindungsgemäßen Andrahtvorrichtung sind Schleifschuh und Führungsbügelsystem unabhängig voneinander bewegbar, nutzen aber die gleiche Achse. Die unabhängige Bewegung ist notwendig, da der Schleifschuh im Fahrbetrieb der Oberleitung folgen muss, das Führungsbügelsystem aber abgesenkt bleiben muss, d. h., die vertikale Bewegung des Stangenkopfes wird in eine rotative Bewegung des Führungsbügelsystems überführt.

Das Führungsbügelsystem ist dabei derart geformt, dass der Schleifschuh bei Annäherung an die Oberleitung parallel zu dieser ausricht- und zentrierbar ist.

Die Andrahtvorrichtung dient zur Ausrichtung und Zentrierung des Stromabnehmerkopfes während des Einfädelns an die Oberleitung (nachfolgend als Andrahtvorgang bezeichnet). Aktuell werden Andrahtvorgänge manuell durch den Fahrer oder mit Hilfe von, an der Oberleitung installierten, Trichtern bewerkstelligt. Hierbei muss das Fahrzeug exakt unter den Trichtern positioniert werden, um einen erfolgreichen Andrahtvorgang zu ermöglichen. Die genannte Erfindung integriert einen beweglichen Trichter, ausgebildet als nach außen geneigte Drahtbügel, am Stromabnehmerkopf, wodurch der Andrahtvorgang enorm erleichtert wird, da der Fangbereich des Stromabnehmerkopfes um ein Vielfaches vergrößert wird. Während des Andrahtvorgangs wird der Trichter durch die Anpresskraft an die Oberleitung automatisch abgesenkt. Ein Mechanismus überträgt die Hubbewegung des Schleifschuhs beim Andrahten in eine Rotationsbewegung des Trichters, wodurch dieser abgesenkt wird. Der Mechanismus ist federbelastet, wodurch beim Abdrahten die Federvorspannung das erneute Aufstellen der Andrahthilfe bewirkt.

Die integrierte Nachhubeinrichtung (Federvorspannung des Stromabnehmerkopfes) ermöglicht eine zusätzliche vertikale Bewegung relativ zur Stromabnehmerstange. Bewegt sich die Stromabnehmerstange infolge von Fahrbahnunebenheiten nach unten, würde dies eine Entgleisung verursachen. Durch die Nachhubeinrichtung hebt sich der Stromabnehmerkopf von der Stromabnehmerstange ab und hält den Kontakt zur Oberleitung. Eine Entgleisung wird verhindert.

Anhand eines Ausführungsbeispiels soll die Erfindung näher beschrieben werden.

Es zeigen:
- Figur 1 -: Andrahtvorrichtung während des Andrahtvorgangs
- Figur 2 -: Andrahtvorrichtung in angedrahtetem Zustand

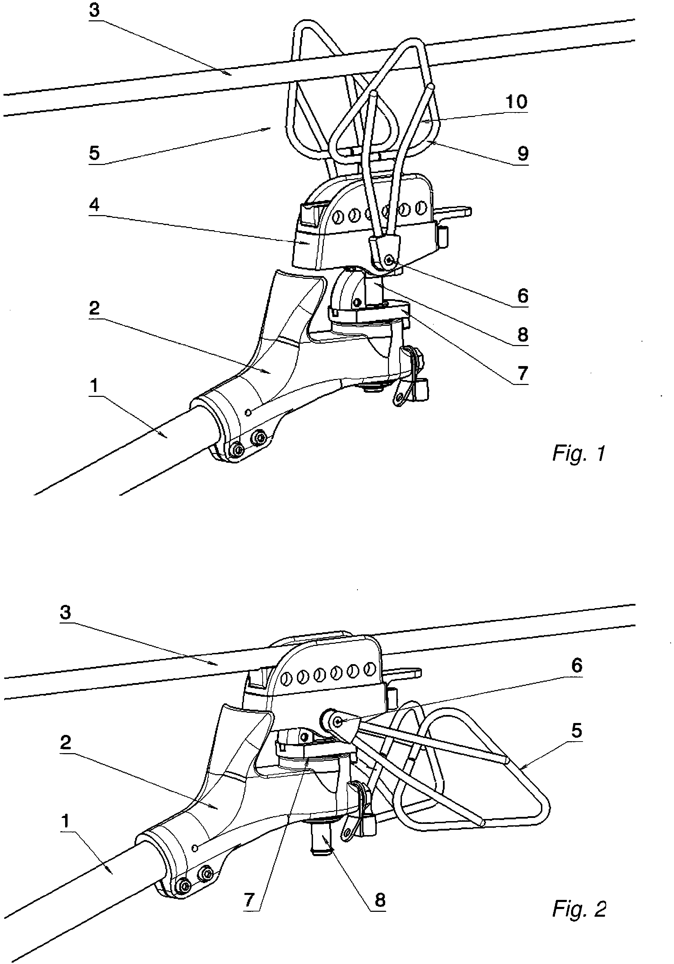

Die Figur 1 zeigt die erfindungsgemäße Andrahtvorrichtung während des Andrahtvorgangs. Die Andrahtvorrichtung umfasst im Wesentlichen ein am Schleifschuh **4** angeordnetes Führungsbügelsystem **5**. Der Schleifschuh **4** mit dem Führungsbügelsystem **5** ist über die Achse **6** der Hebe- und Senkeinheit **7** mit dem Stangenkopf **2**, der wiederum mit der Stromabnehmerstange **1** verschraubt ist, verbunden.

Das Führungsbügelsystem **5** besteht aus den schwenkbar auf der Achse **6** gelagerten Drahtbügelhaltern **10** mit den Drahtbügeln **9**. Über die federbelastete Hebe- und Senkeinheit **7** wird das Führungsbügelsystem **5** im unbelasteten Zustand, d. h., der Schleifschuh liegt nicht am Fahrdraht **3** an, aufgestellt.

Die Figur 2 zeigt die erfindungsgemäße Andrahtvorrichtung im angedrahteten Zustand. In diesem Zustand, d. h., der Schleifschuh liegt am Fahrdraht an, ist das Führungsbügelsystem **5** abgesenkt.

Infolge des Anpreßdrucks, der über den an der Stromabnehmerstange **1** angeordneten Stangenkopf **2** und am Fahrdraht **3** auf den Schleifschuh **4** aufgebracht wird, erfolgt eine senkrechte Bewegung des Schleifschuhs **4** auf der Achse **8** der Hebe- und Senkeinheit **7** und damit eine Auslenkung des Führungsbügelsystems **5** aus der annähernd senkrechten Position in eine annähernd waagerechte Position.

Falls sich die Stromabnehmerstange **1,** beispielsweise infolge von Fahrbahnunebenheiten bewegt, hebt die Hub- und Senkeinheit **7** den Schleifschuh **4** an und hält dadurch den Kontakt zum Fahrdraht **3** und wirkt wie eine Nachhubeinrichtung, indem der Kopf relativ zur Stromabnehmerstange **1** angehoben wird und weiterhin den Kontakt zur Oberleitung sicherstellt. Hierdurch werden Entgleisungen des Schleifschuhs **4** vom Fahrdraht **3** sicher verhindert.

Die erfindungsgemäße Andrahtvorrichtung kann für händisches, teil- oder vollautomatisiertes Andrahten verwendet werden, wobei das Aufstellen und Absenken des Führungsbügelsystems **5** beim An- oder Abdrahten automatisch erfolgt. Die Betätigung des Führungsbügelsystems **5** erfolgt durch Aufbringen einer Kontaktkraft, aufgebracht durch Federn oder Aktuatoren am Stromabnehmersystem, am Fahrdraht **3.**

Der Mechanismus der Hebe- und Senkeinheit **7** für das Führungsbügelsystem **5** ist federbelastet. Dadurch stellt sich beim Abheben der Stromabnehmerstange **1** mit dem Stangenkopf **2** vom Fahrdraht **3** das Führungsbügelsystem **5** automatisch auf. Der gleiche Mechanismus senkt beim Anpressen des Schleifschuhs **4**, der Bestandteil des Stangenkopfes **2** ist, an den Fahrdraht **3** das Führungsbügelsystem **5** automatisch ab. Dieser Mechanismus ermöglicht weiterhin eine zusätzliche vertikale Bewegung des Stangenkopfes **2** im Betrieb des Fahrzeuges.

### Bezugszeichenaufstellung

- 1: - Stromabnehmerstange
- 2: - Stangenkopf
- 3: - Fahrdraht
- 4: - Schleifschuh
- 5: - Führungsbügelsystem
- 6: - Achse
- 7: - Hebe- und Senkeinheit
- 8: - Hub- und Drehachse
- 9: - Drahtbügel
- 10: - Drahtbügelhalter

## Patentansprüche

1. Andrahtvorrichtung für Schleifschuhe von Stromabnehmern an Fahrdrähten, welche mit am Fahrzeug höhen- und seitenbeweglich angebrachten federbelasteten Stangen verbunden sind, wobei die Schleifschuhe mit diesen überragenden verschwenkbaren Führungsbügeln versehen sind,
**dadurch gekennzeichnet, dass**
der Schleifschuh (4), der mit einem verschwenkbaren Führungsbügelsystem (5) ausgerüstet ist, mittels einer Hebe- und Senkeinheit (7) mit dem Stangenkopf (2) der Stromabnehmerstange (1) verbunden ist.

2. Andrahtvorrichtung nach Anspruch 1,
**dadurch gekennzeichnet, dass**
die Hebe- und Senkeinheit (7) einen federbelasteten Mechanismus aufweist, wodurch das Führungsbügelsystem (5) über die Achse (6) im abgedrahteten Zustand aus der horizontalen Lage in eine vertikale Lage schwenkt.

3. Andrahtvorrichtung nach Anspruch 1 und 2,
**dadurch gekennzeichnet, dass**
das Führungsbügelsystem (5) beim Andrahtvorgang durch den Anpreßdruck des Schleifschuhs (4) an den Fahrdraht (3) sich aus der vertikalen Lage in die horizontale Lage schwenkt.

4. Andrahtvorrichtung nach Anspruch 1 bis 3,
**dadurch gekennzeichnet, dass**
das Führungsbügelsystem (5) aus zwei sich gegenüberliegende nach außen geneigte Drahtbügel (9) besteht, die über die Drahtbügelhalter (10) mit der Achse (6) verbunden sind.

5. Andrahtvorrichtung nach Anspruch 1 bis 4,
**dadurch gekennzeichnet, dass**
der Schleifschuh (4) mit dem Führungsbügelsystem (5) über die Hub- und Drehachse (8) der Hebe- und Senkeinheit mit dem Stangenkopf (2) verbunden ist.

6. Andrahtvorrichtung nach Anspruch 1 bis 5,
**dadurch gekennzeichnet, dass**
Schleifschuh (4) und Führungsbügelsystem (5) unabhängig voneinander bewegbar sind.

7. Andrahtvorrichtung nach Anspruch 1 bis 6,
**dadurch gekennzeichnet, dass**
das Führungsbügelsystem (5) derart geformt ist, dass der Schleifschuh bei Annäherung an die Oberleitung parallel zu dieser ausricht- und zentrierbar ist.
